**Europäisches Patentamt**

**European Patent Office**

**Office européen des brevets**

(11) Veröffentlichungsnummer: **0 254 881**
**A2**

(12) # EUROPÄISCHE PATENTANMELDUNG

(21) Anmeldenummer: 87109240.9

(22) Anmeldetag: 26.06.87

(51) Int. Cl.⁴: **F27B 5/04** , **F27B 5/08** ,
//B22F3/14

(30) Priorität: 30.07.86 DE 8620411 U

(43) Veröffentlichungstag der Anmeldung:
**03.02.88 Patentblatt 88/05**

(84) Benannte Vertragsstaaten:
**AT BE CH DE FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Boneff, Stoyan, Dr.**
**Lisztstrasse 16**
**D-8580 Bayreuth(DE)**

(54) **Thermische Isolierung für Hochdrucksinteröfen.**

(57) Thermische Isolierung für Hochdrucksinteröfen, die aus mehreren abwechselnden Lagen von Graphitfilz und gasdichter Graphitfolie besteht.

EP 0 254 881 A2

# Thermische Isolierung für Hochdrucksinteröfen

Die Erfindung betrifft eine thermische Isolierung für Hochdrucksinteröfen, die innerhalb eines Druckgehäuses den Ofenraum allseitig umgibt.

Zur sintermetallurgischen Herstellung von Formkörpern aus Metallen, Keramik oder Metallkeramik benötigt man Öfen, in denen entsprechende Preßlinge gesintert und unter Druck mit Hilfe eines Prozessgases verdichtet werden können.

Ein solcher Hochdrucksinterofen ist beispielsweise in dem DE-GM 84 31 211 beschrieben. Dieser besteht aus einem hochdruckfesten Metallgehäuse, in dem eine thermische Isolierung allseitig den Ofenraum umgibt, der aus einem mit Heizleitern versehenen Graphitzylinder aufgebaut ist. Zur thermischen Isolierung verwendet man mehrere Lagen Graphitfilz, der die Druckgehäusewand von der Heizung abschirmt.

Der wenig dichte Aufbau dieses Graphitfilzes erlaubt allerdings den Austausch von heißem Prozessgas vom Ofenraum zur Druckgehäusewand. Energieverluste, Temperaturungleichmäßigkeiten im Ofenraum und eine durch die Erwärmung notwendig verstärkte Druckgehäusewand sind die Folge dieser ungenügenden thermischen Isolierung.

Es war daher Aufgabe der vorliegenden Erfindung eine thermische Isolierung für Hochdrucksinteröfen zu schaffen, die innerhalb eines Druckgehäuses den Ofenraum allseitig umgibt und die den Austausch von heißem Prozessgas vom Ofenraum zur Druckgehäusewand möglichst weitgehend unterdrückt.

Diese Aufgabe wurde erfindungsgemäß dadurch gelöst, daß die thermische Isolierung aus mehreren abwechselnden Lagen Graphitfilz und gasdichter Graphitfolie besteht.

Im zylindrischen Teil des Ofens werden diese aufeinanderliegenden Lagen vorzugsweise endlos gewickelt, während im Deckelbereich mehrere Lagen abwechselnd aufeinandergelegt werden. Die Graphitfilzlagen bewirken hierbei die thermische Isolation, während die Graphitfolienlagen Sperrschichten bilden, die den Prozeßgasdurchtritt weitestgehend verhindern. Man erreicht hiermit eine gleichmäßigere und konstantere Temperaturverteilung im Ofenraum und eine bessere Energieausnutzung. Außerdem kann das Druckgehäuse dünnwandiger gehalten werden.

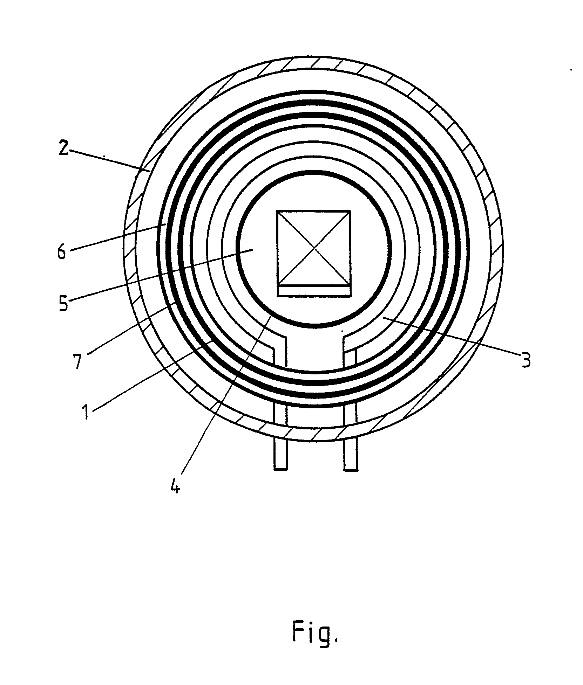

Die Abbildung zeigt schematisch einen Hochdrucksinterofen mit der erfindungsgemäß thermischen Isolierung im Querschnitt. Der Ofen besteht aus einem Druckgehäuse (2) und einem Graphitzylinder (4) als Begrenzung des Ofenraums (5). Um den Graphitzylinder (4) sind die Heizelemente (3) angeordnet. Zwischen Druckgehäuse (2) und den Heizelementen (3) befindet sich die thermische Isolierung (1), die sich aus abwechselnden Lagen von Graphitfilz und gasdichter Graphitfolie (7) zusammensetzt.

Für die Graphitfolie (7) haben sich Schichtdicken von 0,1 bis 1 mm als günstig erwiesen.

## Ansprüche

Thermische Isolierung für Hochdrucksinteröfen, die innerhalb eines Druckgehäuses den Ofenraum allseitig umgibt, dadurch gekennzeichnet, daß sie aus mehreren abwechselnden Lagen Graphitfilz (6) und gasdichter Graphitfolie (7) besteht.

Fig.